# EUROPÄISCHE PATENTANMELDUNG

(11) **EP 2 138 294 A1**
(43) Veröffentlichungstag der Anmeldung: **30.12.2009**
(21) Anmeldenummer: 09160976.8
(22) Anmeldetag: 25.05.2009
(51) Int. Cl.: B29C 44/34

(54) **Vorrichtung und Verfahren zum Eintrag eines Treibmittels**

(30) Priorität: 25.06.2008 EP 08159047
(71) Anmelder: Sulzer Chemtech AG, 8404 Winterthur (CH)
(72) Erfinder: Schlummer, Christian, 8004, Zürich (CH)
(74) Vertreter: Sulzer Management AG

(57) **Zusammenfassung**

Eine Vorrichtung (1) zur Erzeugung von Schäumen umfasst eine Extrusionsvorrichtung (2) zur Plastifizierung einer Polymerschmelze, einen Wärmetauscher (3,8,9) zur Kühlung der Polymerschmelze, sowie ein Verbindungsstück (4) zur Verbindung der Extrusionsvorrichtung (2) mit dem Wärmetauscher (3,8.9) wobei das Verbindungsstück (4) eine Dosiervorrichtung (5) zum Eintrag eines Treibmittels in die Polymerschmelze enthält.

## Beschreibung

Die Erfindung betrifft eine Vorrichtung und ein Verfahren zum Eintrag eines Treibmittels oder Additivs in eine Polymerschmelze zur Erzeugung geschäumter Bauteile oder Halbzeuge mittels eines Extrusionsverfahrens.

Eine derartige Vorrichtung ist beispielsweise aus der DE 198 53 021 A1 bekannt, welche zum Imprägnieren einer Polymerschmelze mit einem Fluid eingesetzt wird, insbesondere zur Herstellung geschäumter Formteile mit einer Spritzgiessmaschine. Hierzu ist ein Imprägnierungskörper nach einem Plastifizierungsaggregat angeordnet, in welches Polymerschmelze eintritt, welche in einem eine drehbare Schnecke enthaltenden Zylinders unter Wärmezufuhr aufgeschmolzen worden ist. Der Imprägnierungskörper enthält einen im Schmelzekanal zentrierten Torpedo, dessen Aussenseite aus Sintermetall gefertigt ist. Die äussere Begrenzung des Ringspalts wird durch einen Zylinder gebildet, der ebenfalls aus Sintermetall hergestellt ist. Das Treibmittel kann sowohl über die poröse Aussenhülle des Torpedos als auch über die Sintermetall-Oberfläche des Zylinders in die Schmelze eingebracht werden. Ein Nachteil dieser Lösung ist darin zu sehen, dass aufgrund des kurzen Bauraums die Abfuhr von Wärme nur sehr begrenzt möglich ist. Aus diesem Grund wurde bisher die Vorrichtung gemäss DE 198 53 021 A1 nur im Spritzgiessverfahren eingesetzt.

Als weitere Entwicklung ist die Lösung gemäss EP1892034 anzusehen, die auch für Extrusionsverfahren eingesetzt wird. Die dort beschriebene Anlage weist eine Dosiervorrichtung für ein Additiv auf, insbesondere ein Treibmittel, welches in ein flüssiges oder pastöses Medium eingespeist wird. Bei dem flüssigen Medium kann es sich insbesondere um eine Flüssigkeit mit hoher Viskosität, wie beispielsweise eine Polymerschmelze handeln, wobei die Polymerschmelze insbesondere in einer Anlage zur Erzeugung eines geschäumten Formteils einsetzbar ist. Eine Fördervorrichtung dient der Verflüssigung eines als Granulat vorliegenden Polymers, wobei die Fördervorrichtung insbesondere als Extruder ausgebildet sein kann. Die Fördervorrichtung kann für eine Oszillationsbewegung ausgelegt sein oder eine Rotationsbewegung um die gemeinsame Achse von Zylinder und Schneckenkolben ausführen. Eine oszillierende Bewegung von Schnecke und/oder Schneckenkolben ist vorteilhaft, wenn eine Formmasse in eine Spritzgiessmaschine einzudosieren ist. Das verflüssigte Polymer tritt nach dem Aufschmelzen im Zylinder in eine Dosiervorrichtung ein, in welcher ein Additiv zu der als flüssige oder pastöse Masse vorliegenden Schmelze beigemischt wird. Im Anschluss an die Dosiervorrichtung ist zumindest ein statisches Mischelement angeordnet, wodurch eine homogene Verteilung des Additivs im Schmelzestrom realisierbar ist. Die aus dem Mischelement austretende Formmasse wird zur Druckerhöhung und/oder Dosierung in einen Kompressionsraum und/oder Volumenspeicherraum eingeleitet, dessen Volumen durch einen hin- und her beweglichen Förderkolben in einem Einspritzzylinder veränderbar ist. Zur Temperierung der Formmasse kann der Einspritzzylinder zumindest über einen Teil des eingeschlossenen Volumens mit Heizvorrichtungen ausgestaltet sein. Der Verbindungskanal zur Förderung der Formmasse vom Absperrmittel bis in den Kompressionsspeicheraum und/oder Volumenspeicherraum kann ebenfalls mit einer Heizvorrichtung versehen sein, wenn über die Kanallänge ein signifikanter Temperaturabfall der Formmasse feststellbar ist. Die Wärme kann somit im Rahmen der in der EP1892034 gezeigten Vorrichtung zur Dosierung eines Treibmittels nicht ausreichend abgeführt werden, was auch der Zielsetzung der Vorrichtung gemäss EP1892034 zuwider läuft.

Allerdings besteht immer noch die Problematik, dass für grosse Durchsätze im kontinuierlichen Betrieb eine ungenügende Kühlleistung zur Verfügung steht, insbesondere wenn Schäume niedriger Dichte hergestellt werden sollen. Diese Schäume haben die Eigenschaft, dass sie, bedingt durch den erforderlichen hohen Anteil an Treibfluid kollabieren, wenn nicht gewährleistet ist, dass die Zellwände ausreichende Stabilität aufweisen. Ein Mass für die Stabilität der Zellwände ist die Schmelzefestigkeit. Eine Zunahme der Schmelzefestigkeit wird erreicht, indem die Viskosität der Polymerschmelze erhöht wird, was einen vermehrten Kühlbedarf zur Folge hat, da hierzu die Polymerschmelze gekühlt werden muss. Daher ist die vorgenannte Lösung bisher auf die Herstellung mittelschwerer bis schwerer Schäume begrenzt, wobei derartige schwere Schäume eine Dichte von 50 - 90% bezogen auf ein kompaktes, also ungeschäumtes Polymer aufweisen.

Da die Schäume niedriger Dichte somit eine hohe Schmelzefestigkeit erfordern, muss die Temperatur am Austritt aus dem Extrusionswerkzeug möglichst niedrig gehalten werden. Aufgrund des beschränkten Bauraums ist die Abfuhr von Wärme nur in begrenztem Ausmass möglich, daher war es bisher nicht möglich, Schäume niedriger Dichte zufriedenstellend in einem Extrusionsverfahren zu erzeugen, wenn eine Dosiervorrichtung in der oben beschriebenen Ausführung zum Einsatz kam.

In der EP0463759 wird vorgeschlagen, einen dynamischen Mischer zum Einmischen von Treibmittel im Anschluss an einen Extruder zu verwenden. Der dynamische Mischer gemäss EP0463759 umfasst einen hohlen zylindrischen Stator, der nicht unbedingt statisch zu sein braucht sowie einen zylindrischen Rotor, der sich innerhalb des Stators dreht. Die gegenüberliegenden Oberflächen von Rotor und Stator weisen eine Mehrzahl von sich am Umfang erstreckenden Ausnehmungen auf, zwischen welchen das Material gemischt wird, wenn es durch den Mischer strömt. Der dynamische Mischer ist nachteilig, weil durch die Bewegung des Rotors ein zusätzlicher Energieeintrag in die Schmelze erfolgt und die bewegten Teile des dynamischen Mischers aufwendiger in ihrer Herstellung und Wartung sind.

Als Lösung des Problems könnte die Kühlleistung erhöht werden, dem allerdings die Begrenzung der maximal verfügbaren Wärmeaustauschfläche entgegensteht. Die Kühlleistung geht somit gegen einen maximalen Grenzwert. Der Fachmann würde routinemässig durchaus Überlegungen anstellen, Materialien mit höherem Wärmeübergangskoeffizienten bei der Auslegung der Dosiervorrichtung sowie des statischen Mischelements einzusetzen.

Als weitere Lösung könnte der Fachmann in Betracht ziehen, die Extrusionsvorrichtung zu verlängern, um die Wärmeaustauschfläche zu vergrössern. Dann ergibt sich allerdings ein weiteres Problem. Die Verlängerung der Extrusionsvorrichtung hat einen höheren Druckverlust zur Folge, was ebenfalls unerwünscht ist, unter anderem deswegen, weil die Durchsatzleistung der Extrusionsvorrichtung durch den erhöhten Druckaufbau reduziert und/oder der Energieeintrag in die Schmelze erhöht wird, was wiederum eine höhere Kühlleistung erfordert.

Aufgabe der Erfindung ist es, Schäume niedriger Dichte zu erzeugen, das heisst insbesondere Schäume mit einer Dichte von weniger als 50%, vorzugsweise weniger als 20%, besonders bevorzugt weniger als 10% bezogen auf ein kompaktes, also ungeschäumtes Polymer.

Diese Aufgabe wird durch eine Vorrichtung zur Erzeugung eines Schaums gelöst, die eine Extrusionsvorrichtung zur Plastifizierung einer Polymerschmelze, einen Wärmetauscher zur Kühlung der Polymerschmelze umfasst, sowie ein Verbindungsstück zur Verbindung der Extrusionsvorrichtung mit dem Wärmetauscher, wobei das Verbindungsstück eine Dosiervorrichtung zum Eintrag eines Treibmittels in die Polymerschmelze enthält. Die Dosiervorrichtung enthält ein Element zur Homogenisierung, wobei das Element zur Homogenisierung einen statischen Mischer umfasst.

Insbesondere kann die Dosiervorrichtung eine Fluidinjektionsdüse enthalten. Zusätzlich kann auch die Extrusionsvorrichtung eine derartige Fluidinjektionsdüse oder eine Dosiervorrichtung gemäss EP1892034 oder DE 198 53 021 A1 enthalten. Das Verbindungsstück kann als ein von der Polymerschmelze durchflossener Kanal. Insbesondere kann der Kanal ringförmig, also als Ringspalt ausgebildet sein. Das Treibmittel umfasst bevorzugt ein physikalisches Treibmittel, insbesondere CO₂, N₂, H₂O oder eine Kombination davon. Der Wärmetauscher kann als Extrusionsvorrichtung ausgebildet sein. Alternativ dazu kann der Wärmetauscher als statischer Apparat ausgebildet sein, der zum Beispiel einen die Polymerschmelze enthaltenden Innenraum aufweist, der Einbauten enthält, wobei durch zumindest einen Teil der Einbauten Kühlmittel leitbar ist. Die Polymerschmelze kann ein halogenhaltiges Additiv enthalten, insbesondere ein Flammschutzmittel umfassen. Der Schaum weist bevorzugt eine Dichte von weniger als 50%, vorzugsweise weniger als 20%, besonders bevorzugt weniger als 10% bezogen auf ein kompaktes, also ungeschäumtes Polymer auf.

In der Vorrichtung wird ein Verfahren zur Herstellung eines Schaums niedriger Dichte durchgeführt, welches die folgenden Schritte umfasst:
■ Plastifizieren eines Polymers in einer Extrusionsvorrichtung
■ Zudosieren eines Treibmittels zu der Polymerschmelze in einer Dosiervorrichtung zur Erzeugung einer treibmittelhaltigen Polymerschmelze
■ Kühlen der treibmittelhaltigen Polymerschmelze in einem Wärmetauscher
wobei die Polymerschmelze nach Verlassen der Extrusionsvorrichtung in ein Verbindungsstück strömt, welches die Dosiervorrichtung enthält. Die Dosiervorrichtung (5) enthält ein Element (13) zur Homogenisierung, welches stromabwärts der Dosiervorrichtung (5) angeordnet ist, wobei die Polymerschmelze im Element zur Homogenisierung homogenisiert wird, indem sie in einem statischen Mischer durchmischt wird.

Vorteilhafterweise wird das treibmittelhaltige Polymerschmelze im Verbindungsstück homogenisiert, sodass ein gleichförmiger Schaum entsteht, das heisst ein Schaum mit im wesentlichen gleich verteilten Hohlräumen oder Zellen. Die treibmittelhaltige Polymerschmelze wird nach der Homogenisierung dem Wärmetauscher zugeführt, sodass die treibmittelhaltige Polymerschmelze abgekühlt werden kann, um eine ausreichende Schmelzefestigkeit zu erhalten, gerade wenn ein Schaum mit mit einer Dichte von weniger als 50%, vorzugsweise weniger als 20%, besonders bevorzugt weniger als 10% bezogen auf ein kompaktes, also ungeschäumtes Polymer hergestellt wird.

Durch die Entkoppelung von Extrusionsvorrichtung und Dosiervorrichtung ergibt sich der Vorteil, dass die Extrusionsvorrichtung in Bezug auf die Plastifizierung optimiert werden kann. Hierdurch ist es möglich, dass Standardmaschinen verwendet werden können, ohne dass bezüglich der Plastifizierleistung oder der Verarbeitbarkeit von sensitiven, beispielsweise temperaturempfindlichen oder faserhaltigen, Materialien Kompromisse eingegangen werden müssten. Die erste Extrusionsvorrichtung kann aus diesem Grund kostengünstig realisiert werden. Zudem ergibt sich als weiterer Vorteil, dass die Dosiervorrichtung zum Eintrag von Treibmittel nicht mehr in der Extrusionsvorrichtung angeordnet sein muss. Daher kann auf scherintensive dynamische Mischvorrichtungen als Bestandteil der Extrusionsvorrichtung verzichtet werden. Gerade für die Verarbeitung von sensitiven Materialien ergeben sich Vorteile, da für diese Materialien zumeist vermieden werden soll, dass sie hohen Scherkräften ausgesetzt sind.

Durch die Entkopplung von Extrusionsvorrichtung und Dosiervorrichtung ergibt sich ferner der Vorteil, dass bei der Verarbeitung von Polymerschmelzen mit halogenhaltigen Additiven (z.B. Flammschutzmitteln) insbesondere bei der Zudosierung von Wasser als Treibmittel bromhaltige Reaktionsprodukte erst nach der Extrusionsvorrichtung entstehen können und damit eine Beschädigung der Extrusionsvorrichtung, insbesondere der Plastifizierschnecke durch aggressive Medien ausgeschlossen werden kann. Dadurch kann die Lebensdauer von Plastifizierschnecken in der Extrusionsvorrichtung erheblich gesteigert werden.

Die Dosierung des Treibmittels erfolgt losgelöst von der ersten Extrusionsvorrichtung im Anschluss in einem Verbindungsstück. Dieses Verbindungsstück kann austauschbar sein und somit kann die Dosiervorrichtung für eine bestehende Anlage einfach nachgerüstet werden. Des weiteren ist es möglich, die Dosiervorrichtung schnell auszutauschen, entweder um eine Wartung durchzuführen oder sie durch eine andere Dosiervorrichtung zu ersetzen, wenn Polymerschmelzen unterschiedlicher Zusammensetzung in der selben Anlage verarbeitet werden sollen. Durch den modulartigen Aufbau der drei Anlagenteile: Extrusionsvorrichtung, Zwischenstück mit Dosiervorrichtung und gegebenenfalls Homogenisiervorrichtung sowie eines Wärmetauschers kann jede der Komponenten für sich ersetzt werden, sodass der Wartungsaufwand erheblich reduziert werden kann.

Die gesamte Dosiervorrichtung kann auch nach Inbetriebnahme einer Standardextrusionsvorrichtung für kompakte Polymerschmelzen, das heisst Polymerschmelzen, die kein Treibmittel enthalten, nachgerüstet werden. Auch jedes Mischelement kann in gleicher Weise nachträglich eingebaut, ersetzt oder ausgetauscht werden, da die Extrusionsvorrichtung, umfassend zumindest einen Zylinder mit der zugehörigen Schnecke, die Dosiervorrichtung und jedes Mischelement ein eigenständiges Modul darstellen.

Nachfolgend wird die Erfindung anhand der Zeichnungen erläutert. Es zeigen:
- Fig. 1: einen Schnitt durch die erfindungsgemässe Vorrichtung nach einem ersten Ausführungsbeispiel
- Fig. 2: einen Schnitt durch die erfindungsgemässe Vorrichtung nach einem zweiten Ausführungsbeispiel

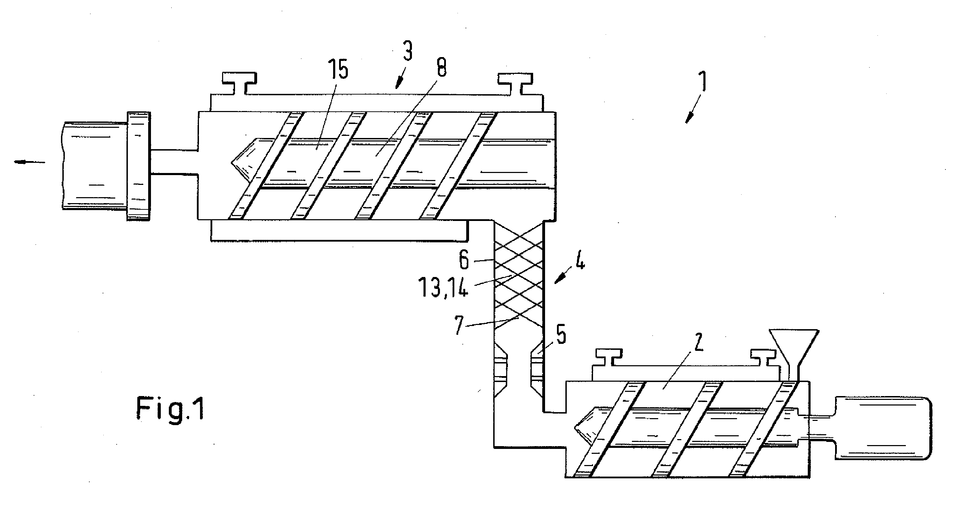

Fig. 1 zeigt die erfindungsgemässe Vorrichtung 1 zur Erzeugung von Schäumen nach einem ersten Ausführungsbeispiel. Die Vorrichtung 1 umfasst eine Extrusionsvorrichtung 2 zur Plastifizierung einer Polymerschmelze, einen Wärmetauscher 3 zur Kühlung der Polymerschmelze, sowie ein Verbindungsstück 4 zur Verbindung der Extrusionsvorrichtung 2 mit dem Wärmetauscher 3. Das Verbindungsstück 4 enthält eine Dosiervorrichtung 5 zum Eintrag eines Treibmittels in die Polymerschmelze. Zur Herstellung von Extrusionsschäumen wird gemäss Fig. 1 eine sogenannte Tandem-Extrusionsanlage verwendet. Hierbei übernimmt die Extrusionsvorrichtung 1 die Aufgaben der Plastifizierung und des Druckaufbaus, aber nicht die Aufgaben des Dosierens und Einmischens eines Treibmittels, welches in einem die Polymerschmelze enthaltenden Kanal 7 des Verbindungsstücks 4 erfolgt. Als Dosiervorrichtung kann beispielsweise eine Dosiervorrichtung gemäss EP1892034 oder auch gemäss DE 198 53 021 A1 zum Einsatz kommen. Die Dosiervorrichtung 5 ermöglicht insbesondere einen Eintrag von Treibmittel über eine oder eine Mehrzahl von mit der Polymerschmelze in Kontakt stehenden Flächen. Im Anschluss an die Dosiervorrichtung 5 ist eine Homogenisiervorrichtung 6 vorgesehen. Diese Homogenisiervorrichtung enthält ein Element zur Homogenisierung 13, welches als statischer Mischer 14 ausgebildet ist. Eine Mehrzahl von statischen Mischern kann hintereinander in Serie angeordnet sein. Die in der Dosiervorrichtung 5 und der Homogenisiervorrichtung 6 erzeugte treibmittelhaltige Polymerschmelze wird in den Wärmetauscher 3 eingetragen. Der Wärmetauscher 3 ist gemäss Fig. 1 als Extrusionsvorrichtung ausgebildet, nachfolgend als zweite Extrusionsvorrichtung 8 bezeichnet. Diese zweite Extrusionsvorrichtung 8 dient vornehmlich zur Kühlung der Treibmittelschmelze. Sie enthält insbesondere eine langsam laufende Schnecke 15, mittels welcher die treibmittelhaltige Polymerschmelze in Bewegung gehalten wird, aber nur geringe Scherkräfte eingebracht werden. Durch die fortwährende Umlagerung der Polymerschmelze in der zweiten Extrusionsvorrichtung kann die Homogenisierung verbessert werden. Gleichzeitig kann der Wärmeübergang durch die Bewegung verbessert werden.

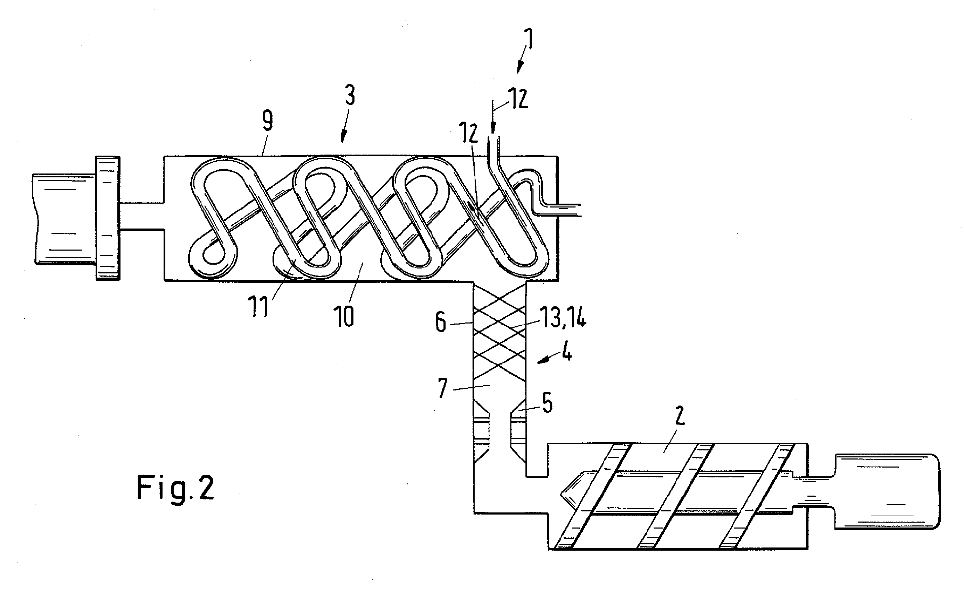

In Fig. 2 ist ein weiteres Ausführungsbeispiel dargestellt, welches im wesentlichen dieselben Bestandteile der Vorrichtung 1 gemäss Fig. 1 enthält, auf die in der Folge verwiesen wird. Im Unterschied zu Fig. 1 ist ein Wärmetauscher 3 vorgesehen, der als statischer Apparat 9 ausgebildet ist. Hierunter ist beispielsweise ein Rohrbündelwärmetauscher zu verstehen. Der statische Apparat 9 weist einen die treibmittelhaltige Polymerschmelze enthaltenden Innenraum 10 auf, der Einbauten 11 enthält, wobei durch zumindest einen Teil der Einbauten Kühlmittel 12 leitbar ist.

In der Vorrichtung 1 gemäss Fig. 1 oder 2 wird ein Verfahren zur Herstellung eines Schaums niedriger Dichte durchgeführt, welches die Schritte umfasst:
■ Plastifizieren eines Polymers in einer Extrusionsvorrichtung 2
■ Zudosieren eines Treibmittels zu der Polymerschmelze in einer Dosiervorrichtung 5 zur Erzeugung einer treibmittelhaltigen Polymerschmelze
■ Kühlen der treibmittelhaltigen Polymerschmelze in einem Wärmetauscher (3,8,9)
wobei die Polymerschmelze nach Verlassen der Extrusionsvorrichtung 2 in ein Verbindungsstück 4 strömt, welches die Dosiervorrichtung 5 enthält.
Die treibmittelhaltige Polymerschmelze kann zusätzlich in der Homogenisierungsvorrichtung 6 homogenisiert werden. Anschliessend wird die treibmittelhaltige Polymerschmelze nach der Homogenisierung dem Wärmetauscher (3,8,9) zugeführt.

Ein Schaum mit einer Dichte von weniger als 50%, vorzugsweise weniger als 20%, besonders bevorzugt weniger als 10% bezogen auf ein kompaktes, also ungeschäumtes Polymer kann durch das das Verfahren hergestellt werden. Mit anderen Worten, der Schaum ist um mehr als 50% leichter, vorzugsweise um bis zu 80% leichter, besonders bevorzugt um bis zu 90% leichter als ein kompaktes, also ungeschäumtes Polymer.

Die Dichte des kompakten, ungeschäumten Polymers liegt beispielsweise für Polyethylen von niedriger Dichte (LDPE) im Bereich von 910 - 925 (kg/m³) und für Polyethylen hoher Dichte (HDPE) im Bereich von 941-965 (kg/m³) wie in dem Handbuch "Materials Science of Polymers for Engineers", 2nd edition by Osswald, Tim A. and Menges, Georg., Carl Hanser Verlag Munich, 2003 gezeigt ist. Für amorphes Polypropylen liegt die Dichte bei ungefähr 855 (kg/m³) und für kristallines Polypropylen bei 946 (kg/m³), wie unter www.wikipedia.org unter dem Stichwort Polypropylen auffindbar ist. Bei beispielhafter Verwendung eines HDPE mit einer Dichte von 950 (kg/m³) lassen sich durch das Verfahren also Schäume von weniger als 50% *950 kg/m³ = 475 kg/m³, vorzugsweise weniger als 190 kg/m³, besonders bevorzugt weniger als 95 kg/m³ herstellen. Insbesondere lassen sich also Schäume mit weniger als 100 kg/m³ herstellen.

## Patentansprüche

1. Vorrichtung (1) zur Erzeugung eines Schaums umfassend eine Extrusionsvorrichtung (2) zur Plastifizierung einer Polymerschmelze, einen Wärmetauscher (3,8,9) zur Kühlung der Polymerschmelze, sowie ein Verbindungsstück (4) zur Verbindung der Extrusionsvorrichtung (2) mit dem Wärmetauscher (3,8,9) wobei das Verbindungsstück (4) eine Dosiervorrichtung (5) zum Eintrag eines Treibmittels in die Polymerschmelze enthält, wobei die Dosiervorrichtung (5) ein Element (13) zur Homogenisierung enthält, welches stromabwärts der Dosiervorrichtung (5) angeordnet ist, **dadurch gekennzeichnet, dass** das Element zur Homogenisierung einen statischen Mischer (14) umfasst.

2. Vorrichtung nach Anspruch 1, wobei die Dosiervorrichtung (5) eine Fluidinjektionsdüse enthält.

3. Vorrichtung nach einem der vorhergehenden Ansprüche, wobei das Verbindungsstück (4) als ein die Polymerschmelze enthaltender Kanal (7) ausgebildet ist.

4. Vorrichtung nach einem der vorhergehenden Ansprüche, wobei das Treibmittel ein physikalisches Treibmittel umfasst.

5. Vorrichtung nach Anspruch 4, wobei das Treibmittel Wasser enthält.

6. Vorrichtung nach einem der vorhergehenden Ansprüche, wobei der Wärmetauscher (3) als Extrusionsvorrichtung (8) ausgebildet ist.

7. Vorrichtung nach einem der vorhergehenden Ansprüche, wobei der Wärmetauscher (3) als statischer Apparat (9) ausgebildet ist.

8. Vorrichtung nach Anspruch 7, wobei der statische Apparat einen die Polymerschmelze enthaltenden Innenraum (10) aufweist, der Einbauten (11) enthält, wobei durch zumindest einen Teil der Einbauten (11) Kühlmittel leitbar ist.

9. Vorrichtung nach einem der vorhergehenden Ansprüche, wobei die Polymerschmelze ein halogenhaltiges Additiv enthält.

10. Vorrichtung nach Anspruch 9, wobei das halogenhaltige Additiv ein Flammschutzmittel umfasst.

11. Vorrichtung nach einem der vorhergehenden Ansprüche, wobei der Schaum eine Dichte von weniger als 50%, vorzugsweise weniger als 20%, besonders bevorzugt weniger als 10% bezogen auf ein kompaktes, also ungeschäumtes Polymer aufweist.

12. Verfahren zur Herstellung eines Schaums niedriger Dichte umfassend die Schritte
■ Plastifizieren eines Polymers in einer Extrusionsvorrichtung
■ Zudosieren eines Treibmittels zu der Polymerschmelze in einer Dosiervorrichtung zur Erzeugung einer treibmittelhaltigen Polymerschmelze
■ Kühlen der treibmittelhaltigen Polymerschmelze in einem Wärmetauscher
wobei die Polymerschmelze nach Verlassen der Extrusionsvorrichtung in ein Verbindungsstück strömt, welches die Dosiervorrichtung enthält, wobei die Dosiervorrichtung ein Element zur Homogenisierung enthält, welches stromabwärts der Dosiervorrichtung angeordnet ist, wobei die Polymerschmelze im Element zur Homogenisierung homogenisiert wird, indem sie in einem statischen Mischer durchmischt wird.

13. Verfahren nach Anspruch 11, wobei ein Schaum mit einer Dichte von weniger als 50%, vorzugsweise weniger als 20%, besonders bevorzugt weniger als 10% bezogen auf ein kompaktes, also ungeschäumtes Polymer, hergestellt wird.
